# NOUVEAU FASCICULE DE BREVET EUROPEEN

(11) **EP 2 081 207 B2**
(45) Date de publication et mention de la décision concernant l'opposition: **20.09.2017**
(45) Mention de la délivrance du brevet: 07.05.2014
(21) Numéro de dépôt: 09150639.4
(22) Date de dépôt: 15.01.2009
(51) Int. Cl.: H01H 33/38, H01H 33/64

(54) **Dispositif de commutation haute puissance disposé sur un véhicule à alimentation électrique**
Vorrichtung zur Hochleistungsumschaltung, die auf einem Fahrzeug mit elektrischem Antrieb angeordnet ist
High-power switching device installed on an electrically powered vehicle

(30) Priorité: 15.01.2008 FR 0800234
(43) Date de publication de la demande: 22.07.2009
(73) Titulaire: ALSTOM Transport Technologies, 93400 Saint-Ouen (FR)
(72) Inventeur: Aubigny, Christophe, 65390 Sarniguet (FR); Quentin, Nicolas, 65420 Ibos (FR)
(74) Mandataire: Lavoix

(56) Documents cités:
- EP-A- 0 766 277
- EP-A- 1 564 064
- FR-A- 1 438 984

## Description

### DOMAINE DE L'INVENTION

L'invention se rapporte à un dispositif de commutation haute-puissance disposé sur un véhicule à alimentation électrique, par une ligne d'alimentation telle qu'une caténaire ou un rail, tel qu'un véhicule ferroviaire ou un trolley bus.

Un véhicule à alimentation multi-tension est apte à être alimenté à partir de tensions électriques captées sur une ligne de tension, par exemple caténaire, à courant continu (dont la tension est par exemple de 750 Volt, 1500 Volt ou de 3000 Volt) ou alternativement à partir de tensions électriques captées sur une ligne caténaire à courant monophasé (dont la tension est par exemple de 15000 Volt à 16 2/3 Hertz ou encore de 25000 Volt à 50Hz).

On entend par commutateur, un dispositif de commutation apte à commuter, entre un premier état, dans lequel un moyen de contact établit une liaison électrique entre une première borne individuelle et une borne commune, et un second état, dans lequel ledit moyen de contact établit une liaison électrique entre une seconde borne individuelle et ladite borne commune, par déplacement dudit moyen de contact par un moyen d'entraînement.

Un commutateur est également apte à commuter entre ledit second état et ledit premier état. Cependant, pour plus de clarté, nous mentionnerons uniquement, dans la suite de la description, la commutation entre le premier état et le second état.

On entend ainsi par commutateur de haute puissance, un commutateur qui est capable de réaliser une commutation entre des lignes d'alimentation alternative de tension 15000V ou 25000V avec un courant de 800 Ampères ou ligne d'alimentation continue de tension 750V à 3000V avec un courant continu de 4500 A.

On entend par commutateur, un dispositif de commutation dont les trois bornes sont reliées électriquement à un circuit d'alimentation.

On entend par sectionneur, un dispositif de commutation particulier dans lequel uniquement la borne commune et une borne individuelle sont reliées à un circuit d'alimentation, la troisième borne n'étant connectée à aucun circuit d'alimentation.

### ETAT DE LA TECHNIQUE

Le document « EP-A-1 564 064 » décrit un dispositif de commutation disposé sur un véhicule à alimentation électrique, apte à commuter au moyen d'un moyen d'entraînement, indifféremment dans les deux sens.

Le document DE 1 027 759 décrit aussi un tel dispositif de commutation.

On connaît un commutateur dans lequel la commutation, entre le premier et le second état, est réalisée par le déplacement rectiligne dudit moyen de contact.

Un tel dispositif est par exemple décrit dans la demande de brevet JP09200905.

Dans ce dispositif, chacune des bornes comprend un bloc percé d'une gorge, le bloc étant disposé dans l'air, au sommet d'un isolateur. Les trois isolateurs supportant les trois bornes sont espacés suivant une direction longitudinale, les deux bornes individuelles sont disposées de part et d'autre de la borne commune le long de la direction longitudinale. La borne commune et une première borne individuelle reposent sur une première plaque, la seconde borne individuelle reposant sur une seconde plaque de support.

Le moyen de contact adapté pour réaliser les liaisons électriques entre borne commune et la première borne individuelle d'une part et la borne commune et la seconde borne individuelle d'autre part est un barreau tubulaire mobile comprenant une partie conductrice d'électricité. Le moyen de contact réalise la liaison électrique entre la borne commune et la première (seconde) borne individuelle lorsque le barreau tubulaire, étant dans une première (seconde) position, pénètre à la fois dans la gorge de la borne commune et la gorge de la première (seconde) borne individuelle.

Lors de la commutation, le déplacement du barreau tubulaire entre sa première et sa seconde position, est réalisée par un moyen d'entraînement qui s'étend au-delà de l'espace formé entre les deux bornes individuelles. Le moyen d'entraînement consiste en un levier qui est disposé au-dessus et en dessous de la seconde plaque de support, ledit levier étant actionné par un actionneur qui est logé en dessous de cette même plaque de support. Les moyens d'entraînement et l'actionneur d'un tel dispositif sont volumineux.

De plus, dans l'air, deux bornes haute tension, reliées chacune à une ligne haute tension alternative de 25 kV, doivent être séparées par une ligne de fuite dont la longueur minimale est d'un demi-mètre.

On appelle ligne de fuite la distance minimale que le courant doit parcourir par cheminement le long d'un corps isolant (isolateur) pour se propager entre les deux parties conductrices de l'isolant.

De plus, la distance, dite distance d'isolement, entre deux bornes reliées chacune à une ligne d'alimentation de 25kV doit être supérieure à 230 millimètres dans l'air.

Ces distances sont réglementées en Europe par la norme EN50124-1.

Un tel dispositif de commutation de l'art antérieur présente l'inconvénient d'occuper un espace volumineux et d'être difficilement intégrable parmi les équipements du véhicule.

Ainsi, le but de la présente invention est de proposer un commutateur occupant un espace réduit et facilement intégrable sur un véhicule.

Un autre but de l'invention est de proposer un équipement électrique autonome, apte à réaliser plusieurs fonctions électriques et facilement intégrable sur un véhicule.

### EXPOSE DE L'INVENTION

L'invention a donc pour objet un dispositif de commutation selon la revendication 1.

Selon d'autres modes de réalisation, le dispositif de commutation est selon l'une quelconque des revendications 2 à 12.

L'invention a également pour objet, un procédé selon la revendication 13 de mise en oeuvre d'un dispositif de commutation.

Selon d'autres modes de réalisation, le procédé est selon la revendication 14 ou 15.

L'invention a également pour objet un équipement électrique selon la revendication 16.

Selon un autre mode de réalisation, ledit équipement électrique est selon la revendication 17.

D'autres caractéristiques, buts et avantages de l'invention apparaîtront à la lecture de la description détaillée qui va suivre, et au regard des dessins annexés, donnés à titre d'exemples non limitatifs et sur lesquels :

### DESCRIPTION SOMMAIRE DES FIGURES

- La figure 1, représente le schéma d'un circuit classique de captage du courant pour véhicule ferroviaire ;
- La figure 2 représente schématiquement, un plan de coupe, d'un dispositif de commutation selon l'invention.
- La figure 3 représente schématiquement en vue de côté, l'intégration en toiture d'un dispositif de commutation de l'invention, selon un premier mode de réalisation, dans lequel le dispositif de commutation est un commutateur du type HOC.
- La figure 4 représente schématiquement, vue en perspective, l'intégration en toiture d'un dispositif de commutation de l'invention, selon un premier mode de réalisation, dans lequel le dispositif de commutation est un sectionneur du type PbT. La figure 4 représente également un équipement de toiture selon l'invention.

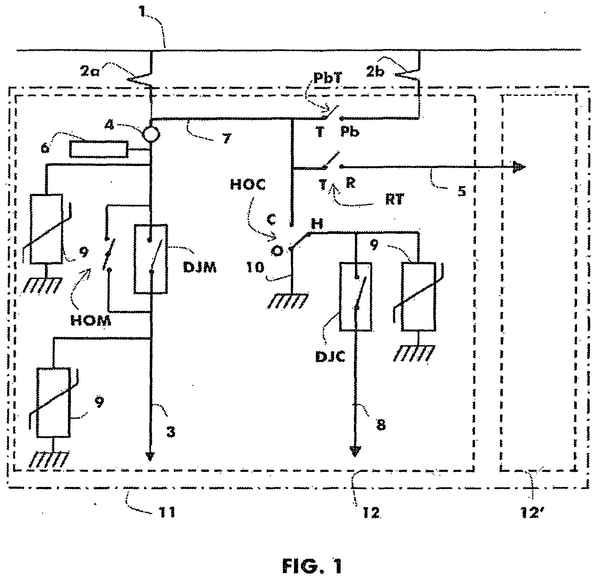

La figure 1 représente le schéma d'un circuit classique de captation du courant d'un véhicule ferroviaire 11 comprenant deux voitures 12 et 12'.

La chaîne de traction d'un véhicule ferroviaire à circuit de traction multi-tensions est classiquement alimentée par un courant continu ou alternatif capté sur une ligne d'alimentation, ici une ligne caténaire 1, au moyen de deux dispositifs de captation d'énergie, ici des pantographes haute tension 2a, et basse tension 2b, en toiture d'une voiture 12, d'un véhicule ferroviaire 11.

En variante, la ligne d'alimentation est un rail d'alimentation électrique et les moyens de captation d'énergie sont par exemple des patins de captation de l'énergie.

Le pantographe basse tension 2b est adapté pour capter sur la caténaire 1, un courant continu à une tension de 1500 volts. Le pantographe haute tension 2a est adapté pour capter, sur la caténaire 1, des courants à une tension supérieure à 1500V.

Lorsque les pantographes haute tension 2a et basse tension 2b viennent en contact avec la ligne caténaire 1, ils sont propres à véhiculer l'énergie captée à la ligne caténaire 1, entre la ligne caténaire 1 et la ligne captation 7, représentée en traits gras sur la figure 1.

Le véhicule ferroviaire 11 comprend classiquement des commutateurs, aptes à configurer le circuit de captation d'énergie du véhicule, de manière à établir les liaisons électriques nécessaires, entre les équipements du véhicule, en fonction de la tension d'alimentation de la ligne caténaire 1.

Un dispositif de commutation PbT, constituant un sectionneur, est dans le circuit d'alimentation du véhicule, sur la ligne de captation 7 entre le pantographe haute tension 2a et le pantographe basse tension 2b.

Un dispositif de commutation TR, constituant un sectionneur, est disposé entre la ligne de de captation 7 et une ligne de raccordement inter-caisse 5.

La ligne de captation 7 est reliée à une ligne de puissance monophasée 3, sur laquelle sont installés un moyen palpeur de tension 4 et un moyen de mesure du courant 6. Le moyen palpeur de tension 4 est adapté pour reconnaître la tension véhiculée par une ligne de puissance monophasée 3.

La ligne de puissance monophasée 3 est adaptée pour acheminer l'énergie électrique, de la ligne de captation 7 vers une chaîne de traction du véhicule ferroviaire, non représentée, de manière à alimenter la chaîne de traction lorsque la ligne caténaire 1 véhicule une tension alternative.

De façon connue en soi, un disjoncteur monophasé DJM est disposé entre le moyen palpeur de tension 4 et la chaîne de traction sur la ligne de puissance monophasée 3.

De façon connue en soi, un sectionneur de mise à la terre HOM est disposé en parallèle avec le disjoncteur monophasé DJM.

Une ligne de puissance continue 8 est adaptée pour véhiculer un courant continu, entre la ligne de captation 7 et ladite chaîne de traction.

Un disjoncteur continu DJC est disposé sur la ligne de puissance continue 8, entre un commutateur HOC et ladite chaîne de traction. Le commutateur continu HOC comprend une borne de captation C reliée à la ligne de captation 7, une borne commune de puissance H reliée à la ligne de puissance continue 8, et une borne de terre O reliée à la terre par l'intermédiaire d'une ligne de terre 10. On appelle ligne de terre, une ligne d'alimentation qui est reliée à la terre, c'est-à-dire au véhicule 11. Un équipement disposé sur un véhicule est relié à la terre lorsqu'il est relié électriquement au véhicule, par exemple à la toiture lorsque l'équipement est disposé en toiture du véhicule.

Par exemple, un équipement électrique qui est disposé en toiture d'un véhicule ferroviaire est relié à la terre lorsqu'il est relié à la toiture 65 du véhicule ferroviaire 11.

Le commutateur continu HOC est adapté pour commuter entre un premier état, dans lequel la borne de captation C et une borne commune de puissance H sont mises en contact électrique, de manière à relier électriquement la ligne de puissance continue 8 à la ligne de captation 7, et un second état, dans lequel la borne de terre O et une borne commune de puissance H sont mises en contact physique et électrique, de manière à connecter la ligne de puissance continue 8 à la terre.

Dans le commutateur HOC, la borne H est une borne commune aux deux états du commutateur, et les bornes O et C sont respectivement une première et une seconde bornes individuelles.

Le sectionneur PbT comprend uniquement deux bornes Pb et T reliées à un circuit d'alimentation. Plus précisément, la borne T est reliée à la ligne de captation 7, et la borne Pb est reliée au pantographe basse tension 2b.

Le sectionneur PbT est adapté pour commuter entre un premier état dans lequel les bornes Pb et T sont mises en contact physique et électrique de manière à établir la liaison électrique entre la ligne de captation 7 et le pantographe basse tension 2b, et un second état dans lequel le pantographe 2b n'est relié électriquement à aucune ligne d'alimentation.

Le sectionneur TR comprend deux bornes T et R. La borne T est reliée à la ligne de captation 7 et la borne R est reliée à une ligne de raccordement inter- caisses 5.

Le sectionneur TR est adapté pour commuter entre, un premier état, dans lequel les bornes R et T sont mises en contact électrique, de manière à établir la liaison électrique entre la ligne de captation 7 et la ligne de raccordement inter-caisses 5 ; et un second état, dans lequel la ligne de raccordement inter-caisses 5 n'est plus relié électriquement à la ligne de captation 7.

La ligne de raccordement inter-caisses 5 est reliée à un second circuit de captation du courant disposé dans une seconde voiture 12' et adapté pour véhiculer du courant d'alimentation depuis un ou plusieurs pantographes, disposés sur la seconde voiture 12', vers une seconde chaîne de traction.

Lorsqu'un des pantographes disposé sur la second voiture 12' est défaillant, la seconde chaîne de traction peut être alimentée, via les pantographes 2a et 2b du premier véhicule 12, en connectant la ligne de raccordement inter-caisses 5 à la ligne de captation 7, via le commutateur TR. Le commutateur TR est alors dans un premier état dans lequel les bornes T et R sont connectées.

Lorsque la seconde chaîne de traction est alimentée par son propre circuit de captation du courant, le commutateur TR est dans un second état dans lequel, la borne T et la borne R sont déconnectées.

Des parafoudres 9 relient respectivement les lignes de puissance alternative 3, de puissance continue 8 et la ligne de captation 7 à la terre de manière à protéger, par absorption d'énergie, lesdites lignes des surtensions et de la foudre.

Lorsque le véhicule 11 circule sur une ligne pouvant être alimentée par plusieurs types de tensions, le conducteur envoie à un ordinateur de bord, non représenté, une information représentative de la tension d'alimentation de la ligne caténaire 1 sur la portion de voie sur laquelle se trouve le véhicule 11.

L'ordinateur de bord, commande la mise en contact d'un dispositif de captation d'électricité avec la ligne d'alimentation, par exemple par la levée du pantographe 2a ou 2b correspondant à ladite tension d'alimentation.

Les moyens palpeurs de tension 4 mesurent la tension d'alimentation sur la ligne de captation 7. L'ordinateur de bord compare la tension mesurée par les moyens palpeurs de tension 4 à l'information envoyée par le conducteur à l'ordinateur de bord.

Si ces deux valeurs sont identiques, l'ordinateur de bord configure le dispositif circuit de captation d'énergie électrique.

Par configurer le circuit on entend, commuter les dispositifs de commutation du circuit de captation d'énergie. Plus particulièrement, les moyens d'entraînement déplacent les moyens de contact afin d'établir les liaisons électriques pour alimenter la chaîne de traction du véhicule au moyen de l'énergie électrique captée à la caténaire 1. Le disjoncteur monophasé DJM ou continu DJC, est ensuite fermé de manière à alimenter la chaîne de traction.

Par exemple, si le pantographe 2a est levé et que la tension véhiculée par la caténaire 1 est une tension alternative, l'ordinateur de bord commande la commutation du commutateur HOC de manière à déconnecter la ligne de puissance continue 8 de la ligne de captation 7 et relier la ligne de puissance continue 8 à la terre. La fermeture du disjoncteur DJM est ensuite commandée par l'ordinateur de bord. Le disjoncteur DJC est ouvert.

Lorsque le pantographe 2a est levé et que la tension véhiculée par la caténaire est une tension continue de 3kV, l'ordinateur de bord commande la commutation du commutateur HOC de manière à connecter la ligne de puissance continue 8 à la ligne de captation 7 pour véhiculer de l'énergie électrique depuis la caténaire vers les équipements de traction, via la ligne de puissance continue 8. La fermeture du disjoncteur DJC est ensuite commandée par l'ordinateur de bord. Le disjoncteur DJM reste ouvert.

Lorsque le pantographe 2a est levé et que la tension véhiculée par la caténaire est une tension continue de 1,5kV, l'ordinateur de bord commande la descente du pantographe 2a et la montée du pantographe 2b. L'ordinateur de bord commande la commutation du sectionneur PbT de manière à connecter électriquement le pantographe 2b à la ligne de captation 7, afin de véhiculer de l'énergie électrique du pantographe basse tension 2b vers les équipements de traction du véhicule.

L'ordinateur commande également la commutation du commutateur HOC de manière à connecter la ligne de puissance continue 8 à la ligne de captation 7. La fermeture du disjoncteur DJC est ensuite commandée par l'ordinateur de bord. Le disjoncteur DJM reste ouvert.

L'étape de configuration du circuit permet d'éviter la détérioration des équipements électriques du véhicule, celle-ci pouvant résulter de la fermeture des disjoncteurs DJC ou DJM, alors que la configuration du circuit est inadaptée à l'énergie véhiculée par la ligne caténaire 1.

L'ordinateur de bord commande la commutation des commutateurs et des sectionneurs respectifs uniquement si l'état des liaisons électriques établies par les commutateurs et respectivement les commutateurs du circuit d'alimentation, n'est pas adapté à la tension véhiculée par la ligne caténaire 1.

Lorsque le pantographe de la seconde voiture 12', qui est adapté pour capter la tension caténaire est défaillant, l'ordinateur de bord commande la fermeture du sectionneur RT de manière à connecter la ligne de captation 7 à la ligne de raccordement 5 pour assurer l'alimentation de la seconde chaîne de traction au moyen du circuit d'alimentation du premier véhicule.

L'homme du métier comprendra aisément qu'un véhicule est équipé d'un ou plusieurs des commutateurs décrits précédemment, en fonction des types d'alimentation disposés sur le trajet du véhicule et susceptibles d'alimenter le véhicule et en fonction des fonctionnalités que le véhicule doit proposer.

On va maintenant décrire un dispositif de commutation selon l'invention.

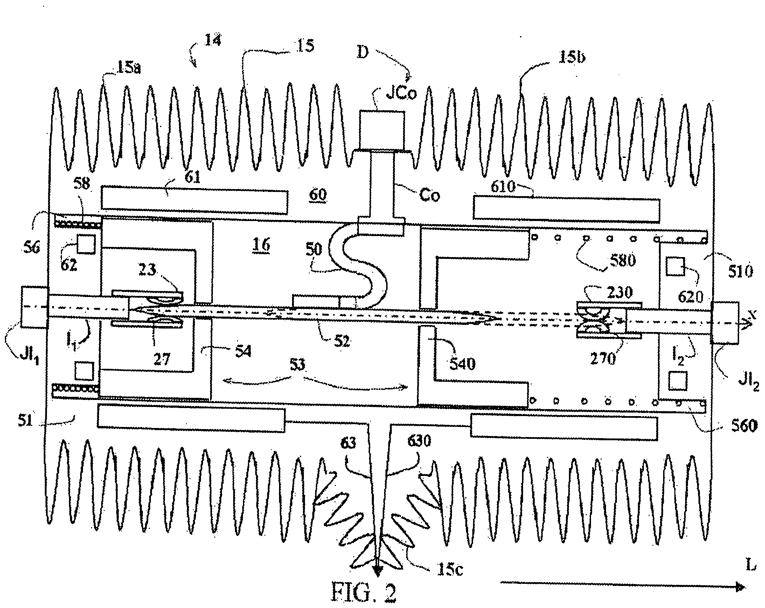

Comme visible sur la figure 2, un dispositif de commutation D selon l'invention comprend un isolateur 14 de forme générale cylindrique s'étendant le long d'une direction L, appelée direction longitudinale dans la suite de la description.

On appellera direction transversale, toute direction perpendiculaire à la direction longitudinale L.

L'isolateur 14 comprend une enveloppe 15 fermée, définissant un espace interne 16 globalement tubulaire. L'espace 16 s'étend dans la direction longitudinale entre deux bases 51 et 510. L'espace 16 est à symétrie de révolution autour d'un axe X s'étendant parallèlement à la direction longitudinale L. Sur le mode de réalisation représenté sur la figure 2, l'espace interne 16 est globalement tubulaire.

L'enveloppe 15 est formée d'un matériau isolant, par exemple du type céramique, résine polymère, ...). Ces matériaux ont un bon comportement vis à vis de leur environnement.

L'enveloppe 15 comprend deux rangées d'ailettes annulaires coaxiales 15a et 15b, réparties le long de l'axe longitudinal L, de part et d'autre d'une barre de jonction JCo, conductrice d'électricité. La barre de jonction JCo est fixée à l'enveloppe 15 et est reliée à la borne commune Co du commutateur D. La borne commune Co est une borne métallique, disposée au sein de l'isolateur 14. La borne commune Co est disposée en surface de l'espace interne 16.

La barre de jonction JCo est adaptée pour relier électriquement la borne commune Co à un circuit d'alimentation du véhicule 11.

L'isolateur 14 est, par exemple, un isolateur de 25000 volts ayant une ligne de fuite, d'au moins 0,5 mètres. L'isolateur présente ainsi une longueur d'environ 0,5 mètres.

La première borne individuelle I₁ et la seconde borne individuelle I₂, sont espacées longitudinalement selon la direction L. Plus précisément, la première borne individuelle I₁ et la seconde borne individuelle I₂, sont agencées respectivement, sur la première 51 et sur la seconde base 510.

Les bornes individuelles I₁ et I₂ présentent chacune une première extrémité reliée à une barre de jonction JI₁, et respectivement JI₂, et une seconde extrémité disposée au sein de l'espace interne 16.

Les barres de jonctions JI₁ et JI₂ sont formées d'un matériau conducteur d'électricité et sont adaptées pour relier électriquement les bornes individuelles I₁ et respectivement I₂, à des circuits d'alimentation du véhicule ferroviaire 11.

La borne commune Co est reliée électriquement à un moyen de contact 52, par l'intermédiaire, d'un moyen de liaison conducteur d'électricité 50 qui est disposé dans l'espace interne 16. De préférence, le moyen de liaison est un moyen de liaison souple. Le moyen de liaison 50 est par exemple, une tresse souple.

Le barreau conducteur 52 comprend deux extrémités, espacées longitudinalement le long de la direction L entre les deux bornes individuelles I₁ et I₂. La longueur du barreau conducteur 52 est inférieure à la distance séparant les deux bornes individuelles I₁ et I₂.

La première extrémité du barreau conducteur 52 fait face à la borne individuelle I₁, et la seconde extrémité dudit barreau conducteur 52 fait face à la seconde borne individuelle I₂. Le barreau conducteur 52 est maintenu dans la direction L, au moyen d'un dispositif de maintien 53, qui sera décrit plus précisément dans la suite de la description.

Au sein de l'espace interne 16, l'extrémité de la borne I₁, respectivement la borne I₂, est munie d'une structure tubulaire 23, respectivement 230, dont l'axe est parallèle à la direction L, de manière à former une mâchoire s'ouvrant face la première extrémité, respectivement la seconde extrémité, du barreau tubulaire 52.

Une paire de lamelles flexibles 27, respectivement 270, est fixée sur la surface interne de la structure tubulaire 23, respectivement 230.

Dans le mode de réalisation représenté sur la figure 2, les deux lamelles de chaque paire de lamelles 27, 270 sont disposées de part et d'autre de l'axe longitudinal X et le moyen de contact 52 s'étend le long de l'axe X. Les lamelles flexibles de chaque paire 27, respectivement 270, sont en contact, l'une avec l'autre, lorsque la structure tubulaire 23, respectivement 230, n'est pas pénétrée par le moyen de contact 52. Lorsque le moyen de contact 52 pénètre dans la structure tubulaire 23, il déforme les lamelles flexibles 27 qui s'appuient sur le moyen de contact 52.

En traits pleins sur la figure 2, on a représenté la position du moyen de contact 52, lorsque le dispositif de commutation D est dans un premier état, dans lequel la première borne individuelle I₁ et la borne commune Co sont reliées électriquement.

Dans cette position, le moyen de contact 52 établit la liaison électrique entre la première borne I₁ et la borne commune Co en pénétrant dans la structure tubulaire 23 de la borne I₁. Dans cette position, le moyen de contact 52 est relié électriquement à la première borne individuelle I₁, par l'intermédiaire des lamelles flexibles 27.

On a représenté en traits pointillés sur la figure 2, la position occupée par le moyen de contact 52 lorsque le dispositif de commutation est dans le second état, dans lequel la seconde borne individuelle I₂ et la borne commune Co sont reliées électriquement.

Dans cette seconde position, le moyen de contact 52 pénètre dans la mâchoire formée par la structure tubulaire 230.

Un dispositif de maintien et de déplacement 53 est adapté pour maintenir le moyen de contact 52, dans la direction longitudinale L, le long de l'axe X, tout en autorisant le déplacement du moyen de contact 52 le long de l'axe X. Le dispositif de maintien 53 comprend deux équipages mobiles 54 et 540 qui sont disposés dans l'espace tubulaire 16.

Les équipages mobiles 54, 540 forment chacun un tube d'axe L et sont en contact glissant avec la surface de l'espace interne 16. Les moyens de maintien 54 et 540 comprennent chacun une base en forme de disque percé d'un trou qui est adapté pour enserrer le moyen de contact 52 et le maintenir dans l'axe X.

Les bases 51, 510 comportent chacune une cavité cylindrique 56, 560, d'axe L débouchant sur l'espace interne 16. Une cavité 56, respectivement 560, est adaptée pour recevoir un moyen flexible 58, respectivement 580, d'axe parallèle à la direction L, qui prend appui sur le fond de ladite cavité 56, respectivement 560. Dans le mode de réalisation représenté sur la figure 2, le moyen flexible 58, respectivement 580, est un ressort.

L'équipage mobile 54, respectivement 540, est apte à venir en appui sur le ressort 58, respectivement 580, ainsi que sur la surface interne des bases 51, respectivement 510.

Dans le premier état du dispositif de commutation D, représenté en traits pleins sur la figure 2, le ressort 58 est comprimé, il est totalement engagé dans la cavité 56.

Le ressort 580 est détendu, il s'étend sur toute la longueur de la cavité 560 et dans l'espace interne 16.

Nous allons à présent décrire le moyen d'entraînement 60 du moyen de contact 52. Le moyen d'entraînement 60 est adapté pour déplacer le moyen de contact 52 de manière à effectuer la commutation entre le premier état et le second état du dispositif de commutation D.

Le moyen d'entraînement 60 du moyen de contact 52 est intégré au sein de l'isolateur 14 et plus précisément dans l'enveloppe 15.

Le moyen d'entraînement 60 comprend deux bobines 61, 610 intégrées dans l'enveloppe 15. Les deux bobines cylindriques 61, 610 entourent le cylindre formant l'espace interne 16 et sont chacune disposée en une extrémité de l'espace interne 16 de telle sorte qu'elles englobent respectivement, les structures tubulaires 23 et 230 des bornes I₁ et I₂ respectivement.

Les bobines 61, 610 sont reliées électriquement à un moyen d'alimentation desdites bobines, non représenté, par l'intermédiaire de lignes d'alimentation 63, 630 qui circulent dans l'enveloppe 15 et sortent de l'isolateur 15 en passant par un isolateur intermédiaire 15c, agencé entres les deux rangées d'ailettes 15a et 15b. Le moyen d'alimentation est par exemple une source de courant ou de tension.

Des aimants permanents 62, respectivement 620 sont répartis en extrémité de l'isolateur 14 dans les bases 51, respectivement 510.

Le dispositif d'actionnement du dispositif de commutation est disposé à l'extérieur du dispositif, il comprend ladite source de courant ainsi qu'un moyen de commande compris dans l'ordinateur de bord.

Un tel dispositif d'actionnement présente l'avantage d'être peu volumineux. De plus, le dispositif d'entraînement décrit présente l'avantage d'être intégré dans l'isolateur du commutateur et de représenter un volume fixe et peu important.

En variante, le moyen d'entraînement 60 est logé à l'extérieur de l'isolateur 14. Ce moyen d'entraînement est par exemple du type électro-aimant comme décrit ci-dessus ou un actuateur pneumatique.

Nous allons à présent décrire comment est effectuée la commutation, entre le premier état, et le second état du dispositif de commutation selon l'invention.

Lorsque le moyen de contact 52 se trouve dans le premier état dans lequel il établit la liaison électrique entre la borne commune Co et la première borne Individuelle I1, les bobines 61 et 610 ne sont pas alimentées en courant.

Lorsque l'ordinateur de bord commande la configuration du circuit et que la commutation est nécessaire, l'ordinateur commande l'alimentation en courant des bobines 61, 610, avec un courant circulant dans un premier sens.

Le sens de circulation du courant dans les bobines 61, 610 est adapté pour que la composante longitudinale du champ magnétique créé dans la bobine 61 entourant la première borne individuelle I₁ s'oppose à la composante longitudinale du champ magnétique crée par les aimants permanents 62 sur l'équipage mobile 54.

Lorsque la somme des composantes longitudinales des champs magnétiques créées par la bobine 61 d'une part, et les aimants permanents 62 d'autre part, est inférieure à la composante longitudinale de la force exercée par le moyen flexible 58 sur l'équipage mobile 54, l'équipage mobile 54 est déplacé longitudinalement en direction de la base 510. Le moyen de contact 52 est ainsi entraîné longitudinalement, en direction de la seconde borne individuelle I2, jusqu'à la seconde position représentée en pointillées sur la figure 2.

Le courant circulant dans la bobine 610 crée un champ magnétique suffisant pour finir la compression du ressort 580, et coller magnétiquement l'équipage mobile 540 à l'aimants permanent 620.

L'alimentation en courant des bobines 61, 610 est ensuite interrompue, et le moyen de contact 52 reste dans sa seconde position dans laquelle il est maintenu.

L'équipage mobile 540 est maintenu contre la paroi 510 grâce à la composante longitudinale du champ magnétique permanent créée par les aimants permanents 620.

La liaison électrique entre la borne commune Co et la seconde borne individuelle I₂ est ainsi établie de manière durable.

Lorsque le courant est établi dans le sens contraire dans les bobines 61, 610 le champ magnétique créé par les aimants permanents 62, 620. Le moyen de contact 52 est alors déplacé vers la première borne individuelle I₁. Le moyen de contact 52 entre de translation selon l'axe X, de manière à venir dans sa première position représentée en traits pleins sur la figure 2, et établir la connexion entre la borne commune Co et la première borne individuelle I₁.

A la lecture de ce qui précède, on comprend que le dispositif de maintien et de déplacement, ou équipage mobile, 54 réalise une fonction de maintien du moyen de contact 52 et une fonction de déplacement du moyen de contact, cette dernière fonction étant réalisée avec les moyens flexible 58, 580. L'homme du métier pourrait aisément concevoir un dispositif d'entraînement dans lequel les fonctions de maintien et de déplacement seraient découplées, c'est-à-dire réalisée par des dispositifs différents.

Un tel dispositif de commutation D, équipé d'un tel moyen d'entraînement 60 du type électromagnétique présente l'avantage d'avoir un temps de commutation plus court qu'un dispositif de commutation de l'art antérieur. Un dispositif de commutation selon l'invention présente un temps de commutation inférieur à une seconde.

Avantageusement, la cavité interne 16 formée au sein de l'isolateur 14 est étanche et remplie d'un fluide diélectrique, par exemple du type gaz diélectrique comme l'hexafluorure de soufre, l'air sec ou bien le vide.

L'utilisation d'un fluide diélectrique, dont les propriétés diélectriques sont supérieures à l'air, permet de réduire de manière significative la distance entre chacune des bornes individuelles I₁ et I₂ et l'extrémité du moyen de contact 52 qui leur est adjacente, lorsque ledit moyen de contact 52 est connecté électriquement à la borne individuelle opposée. La distance entre chacune des bornes individuelles I₁ et I₂ et l'extrémité du moyen de contact 52 qui leur est adjacente, c'est-à-dire la distance d'isolement, pourrait être comprise entre 50 et 100 mm.

Ce mode de réalisation permet également de réduire le temps de commutation du commutateur car la distance à parcourir par le moyen de contact 52, pour effectuer la commutation, est plus faible que dans l'air.

De plus, la distance réduite entre les bornes individuelles du dispositif de commutation au sein de la cavité étanche 16 permet de limiter l'énergie électromagnétique nécessaire à la commutation. En effet, la distance parcourue par le moyen de contact 52 entre le premier état et le second état est réduite, ce qui nécessite moins d'énergie électromagnétique pour déplacer le moyen de contact. Ceci permet également d'utiliser des bobines 61, 610 de taille limitée.

Un commutateur HOC, est un dispositif de commutation selon l'invention, tel qu'il a été décrit précédemment, intégré sur un véhicule 11 et dont les trois bornes de puissance H, de terre O et de toiture C, sont reliées à des circuits d'alimentation, à savoir respectivement, la ligne de puissance continue 8, une ligne de terre 10 et une ligne de captation 7.

La ligne de captation 7 est appelée ligne de toiture quand elle s'étend sur la toiture d'un véhicule. Une ligne de captation 7 peut également s'étendre, en partie dans d'autres parties du véhicule, par exemple à l'intérieur du véhicule.

Dans un commutateur du type HOC, la borne de puissance continue H, correspond à la borne commune Co, la borne de captation C et la borne de terre O correspondent respectivement, indifféremment à l'une ou l'autre de la première borne individuelle I₁ ou de la seconde borne individuelle I₂.

La borne de puissance continue H est reliée à la ligne de puissance continue 8, par l'intermédiaire de la barre de jonction JH qui correspond alors à la barre de jonction commune JCo.

La borne de terre O, qui correspond à la première borne individuelle I1 (ou à la seconde borne individuelle I2) est reliée à une ligne de terre 10, par l'intermédiaire d'une barre de jonction JO correspondant à la première barre de jonction JI₁ (ou à la seconde barre de jonction JI₂).

La borne de captation C, qui correspond alors à la seconde borne individuelle I₂ (ou à la première borne individuelle I₁) est alors reliée à la ligne de captation 7, par l'intermédiaire d'une barre de jonction JC correspondant à la seconde barre de jonction JI₂ (ou à la première barre de jonction JI₁).

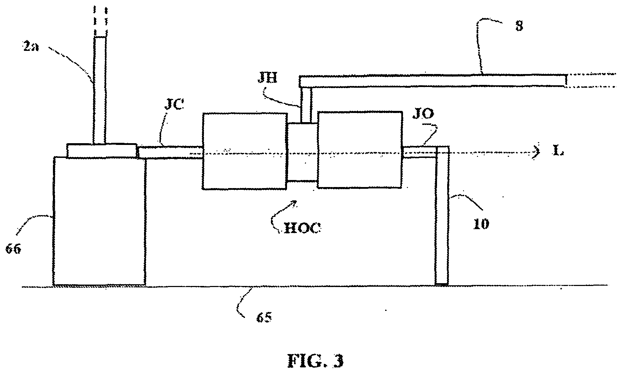

Sur la figure 3, on a représenté, en vue de côté, un exemple d'intégration d'un commutateur HOC en toiture d'un véhicule.

Le dispositif de commutation D, du type HOC est disposé sur le véhicule en toiture de manière à ce que son axe longitudinal X soit globalement horizontal, c'est à dire parallèle à son support, ici la toiture 65.

Dans un autre mode de réalisation, le dispositif de commutation D disposé sur le véhicule est disposé à l'intérieur d'un compartiment dont la face inférieure constitue un support 65 relié à la terre, et s'étendant de façon sensiblement horizontale.

La barre de jonction JO de la borne de terre O, est reliée à la ligne de terre au moyen d'une barre rigide, ou bien une connexion souple constituant la ligne de terre 10 et s'étendant entre la barre de jonction JO et la toiture 65.

La barre de jonction JC de la borne de captation C est reliée directement au pantographe haute tension 2a qui est disposé sur la ligne de toiture 7. Le pantographe haute tension 2a est isolé de la toiture 65 au moyen d'un isolateur 66.

Les liaisons entre la barre de jonction JH et la ligne de puissance 8 ainsi qu'entre la barre de jonction JC et le pantographe haute tension 2a sont des liaisons rigides, de manière à ce que l'axe longitudinal X du commutateur s'étende globalement horizontalement.

La barre de jonction JH de la borne commune de puissance est reliée à la ligne de puissance continue 8 constituée, par exemple, d'une barre métallique s'étendant le long de la toiture 65 et isolée de la toiture 65 au moyen d'isolateurs non représentés.

Le dispositif de commutation selon l'invention présente donc l'avantage de ne pas nécessiter de prévoir des isolateurs spécifiques, adaptés pour isoler les bornes individuelles ou communes de la toiture ou du support sur lequel il repose.

Dans un autre mode de réalisation non représenté, la barre de jonction JC est reliée à une barre métallique constituant la ligne de toiture 7 qui est isolée électriquement de la toiture au moyen d'isolateurs. La ligne de toiture 7 relie alors le dispositif de commutation D, du type HOC, au pantographe 2a.

Ainsi, le dispositif de commutation D selon l'invention est facilement intégrable, en toiture ou dans le véhicule, dans le circuit de captation de l'énergie et est peu volumineux. En effet, il n'est pas nécessaire de prévoir des isolateurs spécifiques à l'isolation de chacune des bornes du circuit car les barres de jonction du circuit qui ne sont pas reliées à la terre, sont directement reliées à des points de connexion qui sont isolés par rapport à la terre.

Dans un autre mode de réalisation non représenté, le dispositif de commutation D, du type HOC, est disposé sur le véhicule de manière à ce que son axe longitudinal X soit globalement vertical, c'est à dire perpendiculaire au support 65.

La barre de jonction JO de la borne de terre O, est reliée à la terre au moyen d'un raccordement mécanique sur la toiture 65 du véhicule 1. La barre de jonction JC de la borne de captation C est reliée directement au pantographe haute tension 2a qui est disposé sur la ligne de toiture 7. La liaison entre la barre de jonction JC et le pantographe haute tension 2a est une liaison rigide.

La barre de jonction JH de la borne commune de puissance est reliée à la ligne de puissance continue 8 constituée, par exemple, d'une barre métallique s'étendant le long de la toiture 65 et isolée de la toiture 65 au moyen d'isolateurs non représentés.

Un sectionneur du type PbT est un dispositif de commutation tel que décrit précédemment, dont uniquement deux bornes T et Pb sont reliées au circuit de captation du courant, à savoir respectivement, à la ligne de captation 7 et à un moyen de captation 2b.

Dans un sectionneur du type PbT, la borne commune Co est indifféremment la borne Pb ou la borne T. Dans le cas où la borne commune est la borne T, la borne Pb est indifféremment l'une ou l'autre de la première borne individuelle I₁ ou de la seconde borne individuelle I₂. Dans le cas où la borne commune est la borne Pb, la borne T est indifféremment l'une ou l'autre de la première borne individuelle I₁ ou de la seconde borne individuelle I₂.

La borne Pb est reliée au pantographe 2b par la barre de connexion JPb et la borne T est reliée à la ligne de puissance par l'intermédiaire d'une barre de jonction JT.

Cette description s'applique également à un dispositif de commutation du type sectionneur TR. Dans un sectionneur du type TR, la borne commune Co est indifféremment la borne R ou la borne T. Dans le cas où la borne commune est la borne T, la borne R est indifféremment l'une ou l'autre de la première borne individuelle I₁ ou de la seconde borne individuelle I₂. Dans le cas où la borne commune est la borne R, la borne T est indifféremment l'une ou l'autre de la première borne individuelle I₁ ou de la seconde borne individuelle I₂.

La borne T est reliée à la ligne de captation 7 au moyen de la barre de connexion JT et la borne R est reliée à la ligne inter-véhicules 5 par l'intermédiaire d'une barre de jonction JR.

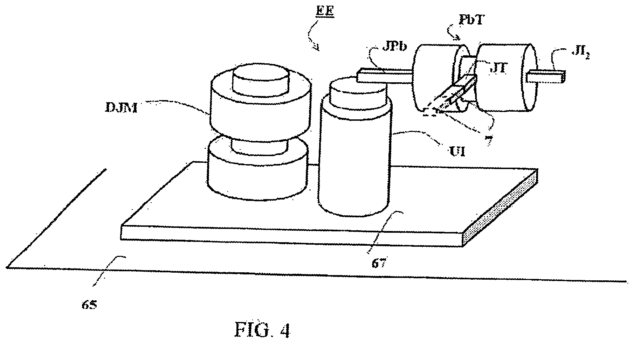

Sur la figure 4, on a représenté un mode de réalisation pour l'intégration du sectionneur PbT en toiture d'un véhicule.

La borne de captation T, ici borne de toiture T du sectionneur PbT est reliée à la ligne de toiture 7 directement entre le dispositif de mesure de tension 6 et le pantographe 2a.

La barre de jonction JPb est reliée directement à un dispositif de mesure courant tension IU intégrant, au sein d'un unique isolateur, les dispositifs de mesure du courant 4 et de la tension 6. La borne T est reliée sur la ligne de toiture 7, constitué par un câble conducteur d'électricité.

Un équipement électrique EE comprend, disposés sur un unique support individuel 67, un dispositif de mesure de courant et de tension UI et le disjoncteur monophasé DJM. L'équipement électrique EE intègre également le sectionneur PbT.

L'équipement électrique EE est disposé sur un support 65, ici sur la toiture, et les connexions avec les autres équipements électriques du véhicule sont réalisées. Notamment, la barre de jonction JT est directement reliée à la ligne de toiture 7.

La ligne de toiture 7 est reliée au pantographe 2b, non représenté sur la figure 4.

L'intégration d'un dispositif de commutation du type sectionneur PbT, à un équipement électrique EE, permet d'assurer une intégration aisée dudit dispositif de commutation PbT dans un espace restreint. De plus, un tel équipement électrique EE constitue un équipement multi-fonctions qui intègre plusieurs fonctions électrique et qui peut être commercialisé en tant que tel.

Un équipement électrique EE comprenant sur un unique support, un dispositif de mesure courant tension UI et un dispositif de commutation PbT présente l'avantage de constituer un ensemble autonome de commutation, car il comprend les moyens de mesures de courant et tension nécessaires à la détection du courant et de la tension de la ligne caténaire ainsi qu'un dispositif de commutation, apte à être commuté par un ordinateur de bord, pour configurer une partie du circuit d'alimentation du véhicule.

En variante, l'équipement électrique EE intègre, outre le disjoncteur monophasé DJM, et le dispositif de mesure du courant et de la tension UI, le sectionneur de mise à la terre HOM ainsi qu'un parafoudre 9, de façon intégrée sur un unique support individuel 67.

En variante, le dispositif de mesure du courant et de la tension UI comprend un isolateur intégrant le dispositif de mesure de la tension 6 et un isolateur intégrant le dispositif de mesure du courant 4. Ces deux isolateurs étant intégrés sur le support individuel 67.

## Revendications

1. Dispositif de commutation (D) disposé sur un véhicule à alimentation électrique, apte à commuter, par déplacement rectiligne d'un moyen de contact (52) au moyen d'un moyen d'entraînement (60), indifféremment dans les deux sens, entre un premier état dans lequel ledit moyen de contact (52) établit une liaison électrique entre une première borne individuelle (I₁) et une borne commune (Co) et un second état dans lequel ledit moyen de contact (52) établit une liaison électrique entre une seconde borne individuelle (I₂) et ladite borne commune (Co), lesdites bornes individuelles (I₁, I₂), ladite borne commune (Co), ledit moyen de contact (52) étant disposés au sein d'un unique isolateur (14), ledit dispositif de commutation (D) étant **caractérisé en ce que** ledit moyen d'entraînement est disposé au sein dudit isolateur (14).

2. Dispositif de commutation (D) selon la revendication 1, **caractérisé en ce que** :
- l'isolateur (14) comprend une enveloppe (15) définissant un espace interne (16) s'étendant dans une direction longitudinale (L) ;
- la première borne individuelle (I₁), la seconde borne individuelle (I₂) et le moyen de contact (52) sont espacées longitudinalement le long de la direction longitudinale (L) ;
- ledit moyen de contact (52) s'étend dans la direction longitudinale (L) entre la première borne individuelle (I₁) et la seconde borne individuelle (I₂) ;
- ledit moyen de contact (52) est relié à ladite borne commune (Co) par d'un moyen de liaison (50).

3. Dispositif de commutation (D) selon l'une quelconque des revendications précédentes, **caractérisé en ce que** lors de la commutation, le moyen de contact (52) subit un mouvement de translation dans la direction longitudinale (L) de manière à être déplacer, indifféremment dans les deux sens, d'une première position dans laquelle il établit la liaison électrique avec la première borne individuelle (I₁) vers une seconde position dans laquelle il établit la liaison électrique avec la seconde borne individuelle (I₂).

4. Dispositif de commutation (D) selon l'une quelconque des revendications précédentes, **caractérisé en ce que** l'espace interne (16) est étanche et est rempli d'un fluide diélectrique.

5. Dispositif de commutation (D) selon l'une quelconque des revendications précédentes, **caractérisé en ce que** le moyen d'entraînement (60) comprend :
- au moins deux bobines (61, 610) intégrées dans l'enveloppe 15) et englobant chacune une borne individuelle (I₁, I₂) ;
- des aimants permanents (64, 640) répartis sur les extrémités de l'enveloppe (15) ;
- un moyen de déplacement (58, 580, 53) du moyen de contact (52) ;
- les bobines (61, 610) étant alimentées au moyen d'un moyen d'alimentation disposée en dehors de l'isolateur (14).

6. Dispositif de commutation (D) selon l'une quelconque des revendications précédentes, **caractérisé en ce que** ledit dispositif (D) est disposé sur un véhicule à alimentation électrique, sur un support (65), de manière à ce que la direction longitudinale (L) soit sensiblement verticale.

7. Dispositif de commutation (D) selon l'une quelconque des revendications précédentes, **caractérisé en ce que** ledit dispositif (D) est disposé sur un véhicule ferroviaire, sur un support (65), de manière à ce que la direction longitudinale (L) soit sensiblement horizontale.

8. Dispositif de commutation (D) selon l'une quelconque des revendications précédentes, **caractérisé en ce que** ledit dispositif de commutation (D) est du type commutateur, la première borne individuelle (I₁), la seconde borne individuelle (I₂) ; ainsi que la borne commune (Co) étant chacune reliées à un circuit d'alimentation.

9. Dispositif de commutation (D) selon la revendication précédente, dans lequel:
- la première borne individuelle (I₁), est une borne de terre (O) et est reliée électriquement à une ligne de terre (10) ;
- la seconde borne individuelle (I₂), est une borne de captation (C) et est reliée électriquement à une ligne de captation (7) ;
- la borne commune (Co) est une borne de puissance (H) et est reliée à une ligne de puissance continue (8).

10. Dispositif de commutation (D) selon l'une quelconque des revendications 1 à 7, **caractérisé en ce que** le dit dispositif de commutation (D) est du type sectionneur, la borne commune (Co) ainsi qu'une seule parmi les deux bornes individuelles (I₁) et (I₂) étant reliées chacune à un circuit d'alimentation.

11. Dispositif de commutation (D) selon la revendication précédente, dans lequel,
- dans une première variante, la borne commune (Co) est une borne qui est ; soit une borne (T) reliée à une ligne de captation (7), une des bornes individuelles (I₁, I₂), étant alors une borne (Pb) reliée à un moyen de captation du courant (2a) ; soit une borne (Pb) reliée à un moyen de captation (2a), une des bornes individuelles (I₁, I₂), étant alors une borne (Pb) reliée à une ligne de captation (7) ;
- dans une seconde variante, la borne commune (Co) est une borne (T) qui est ; soit une borne (T) reliée à une ligne de captation (7), une des bornes individuelles (I₁, I₂), étant alors une borne (R) reliée à une ligne inter-véhicules (5) ; soit une borne (R) reliée à une ligne inter-véhicules (5), une des bornes individuelles (I₁, I₂), étant alors une borne (T) reliée à une ligne de captation (7).

12. Dispositif de commutation (D) selon l'une quelconque des précédentes, **caractérisé en ce que** les bornes (I₁, I₂, Cₒ) du dispositif de commutation qui sont reliées à une ligne d'alimentation, à l'exception du ou desdites bornes qui sont reliées à une ligne de terre, sont reliées à des points de connexion qui sont isolés du support (65).

13. Procédé de mise en oeuvre d'un dispositif de commutation (D), ledit dispositif de commutation (D) étant selon l'une quelconque des revendications précédentes, entre ledit premier état et ledit second état, **caractérisé en ce qu'**il comprend :
- une étape d'alimentation en courant des bobines (61, 610), dans un premier sens de circulation du courant, de manière à entraîner le moyen de contact (52) en direction de la seconde borne individuelle (I₂) ; et
- une étape d'interruption de l'alimentation en courant des bobines (61, 610), lorsque le moyen de contact (52) établit la liaison électrique avec la seconde borne (I₂), de manière à maintenir le moyen de contact en position au moyen des aimants permanents (64, 640).

14. Procédé de mise en oeuvre d'un dispositif de commutation (D), ledit dispositif étant selon l'une quelconque des revendications 1 à 12, pour réaliser la commutation entre ledit second état et ledit premier état, **caractérisé en ce qu'**il comprend :
- une étape d'alimentation en courant des bobines (61, 610), dans un second sens de circulation du courant, de manière à entraîner le moyen de contact (52) en direction de la première borne individuelle (I₁) ;
- une étape d'interruption de l'alimentation en courant des bobines (61,610), lorsque le moyen de contact (52) établit la liaison électrique avec la première borne (I₁), de manière à maintenir le moyen de contact en position au moyen des aimants permanents (64, 640).

15. Procédé de mise en oeuvre d'un dispositif de commutation (D) selon la revendication 13, **caractérisé en ce que** lors de l'étape d'alimentation, le moyen de contact (52) est entraîné depuis la première borne individuelle (I₁), vers la seconde borne individuelle (I₂), lorsque la composante longitudinale du champ magnétique créé par le courant circulant dans la bobine (61) s'oppose à la composante longitudinale du champ magnétique créé par les aimants permanents (62), ledit moyen de contact (52) étant alors entraîné vers la seconde borne individuelle (I₂), au moyen d'un dispositif de déplacement (58, 580, 53).

16. Equipement électrique (EE) **caractérisé en ce qu'**il comporte, de façon intégrée sur un unique support individuel (67) :
- un dispositif de mesure courant tension (UI) ;
- un dispositif de commutation (D) selon la revendication 9.

17. Equipement électrique (EE) selon la revendication précédente, **caractérisé en ce qu'**il comporte en outre, de façon intégrée sur ledit unique support individuel (67), au moins un équipement pris parmi:
- un sectionneur de mise à la terre (HOM) ;
- un parafoudre (9) ;
- un disjoncteur monophasé (DJM).

## Patentansprüche

1. Schaltvorrichtung (D), die an einem elektrisch angetriebenen Fahrzeug angeordnet ist und geeignet ist, durch geradlinige Verschiebung eines Kontaktmittels (52) über ein Antriebsmittel (60), unterschiedslos in den zwei Richtungen, zwischen einem ersten Zustand, in dem das Kontaktmittel (52) eine elektrische Verbindung zwischen einem ersten individuellen Anschluss (I₁) und einem gemeinsamen Anschluss (Co) herstellt, und einem zweiten Zustand, in dem das Kontaktmittel (52) eine elektrische Verbindung zwischen einem zweiten individuellen Anschluss (I₂) und dem gemeinsamen Anschluss (Co) herstellt, zu schalten, wobei die individuellen Anschlüsse (I₁, I₂), der gemeinsame Anschluss (Co), das Kontaktmittel (52) in einem einzigen Isolator (14) angeordnet sind, wobei die Schaltvorrichtung (D) **dadurch gekennzeichnet ist, dass** das Antriebsmittel in dem Isolator (14) angeordnet ist.

2. Schaltvorrichtung (D) nach Anspruch 1, **dadurch gekennzeichnet, dass**:
- der Isolator (14) eine Hülle (15) umfasst, die einen Innenraum (16) begrenzt, der sich in eine Längsrichtung (L) erstreckt;
- der erste individuelle Anschluss (I₁), der zweite individuelle Anschluss (I₂) und das Kontaktmittel (52) längs entlang der Längsrichtung (L) beabstandet sind;
- das Kontaktmittel (52) sich in der Längsrichtung (L) zwischen dem ersten individuellen Anschluss (I₁) und dem zweiten individuellen Anschluss (I₂) erstreckt;
- das Kontaktmittel (52) mit dem gemeinsamen Anschluss (Co) durch ein Verbindungsmittel (50) verbunden ist.

3. Schaltvorrichtung (D) nach einem der vorangehenden Ansprüche, **dadurch gekennzeichnet, dass** beim Schalten das Kontaktmittel (52) eine Translationsbewegung in die Längsrichtung (L) derart erfährt, dass es, unterschiedslos in den zwei Richtungen, von einer ersten Position, in der es die elektrische Verbindung mit dem ersten individuellen Anschluss (I₁) herstellt, in eine zweite Position, in der es die elektrische Verbindung mit dem zweiten individuellen Anschluss (I₂) herstellt, verschoben wird.

4. Schaltvorrichtung (D) nach einem der vorangehenden Ansprüche, **dadurch gekennzeichnet, dass** der Innenraum (16) abgedichtet ist und mit einem dielektrischen Fluid gefüllt ist.

5. Schaltvorrichtung (D) nach einem der vorangehenden Ansprüche, **dadurch gekennzeichnet, dass** das Antriebsmittel (60) umfasst:
- mindestens zwei Spulen (61, 610), die in der Hülle (15) integriert sind und jede einen individuellen Anschluss (I₁, I₂) einschließt;
- Permanentmagnete (64, 640), die auf den Enden der Hülle (15) verteilt sind;
- ein Verschiebungsmittel (58, 580, 53) des Kontaktmittels (52);
- wobei die Spulen (61, 610) mittels eines Versorgungsmittels versorgt werden, das außerhalb des Isolators (14) angeordnet ist.

6. Schaltvorrichtung (D) nach einem der vorangehenden Ansprüche, **dadurch gekennzeichnet, dass** die Vorrichtung (D) an einem elektrisch angetriebenen Fahrzeug auf einem Träger (65) derart angeordnet ist, dass die Längsrichtung (L) im Wesentlichen vertikal ist.

7. Schaltvorrichtung (D) nach einem der vorangehenden Ansprüche, **dadurch gekennzeichnet, dass** die Vorrichtung (D) auf einem Schienenfahrzeug auf einem Träger (65) derart angeordnet ist, dass die Längsrichtung (L) im Wesentlichen horizontal ist.

8. Schaltvorrichtung (D) nach einem der vorangehenden Ansprüche, **dadurch gekennzeichnet, dass** die Schaltvorrichtung (D) vom Typ Kommutator ist, wobei der erste individuelle Anschluss (I₁), der zweite individuelle Anschluss (I₂) sowie der gemeinsame Anschluss (Co) jeweils mit einem Versorgungskreis verbunden sind.

9. Schaltvorrichtung (D) nach vorangehendem Anspruch, wobei:
- der erste individuelle Anschluss (I₁) ein Erdanschluss (O) ist und elektrisch an eine Erdleitung (10) angeschlossen ist;
- der zweite individuelle Anschluss (I₂) ein Abnehmeranschluss (C) ist und elektrisch an eine Abnehmerleitung (7) angeschlossen ist;
- der gemeinsame Anschluss (Co) ein Leistungsanschluss (H) ist und an eine Gleichspannungsleitung (8) angeschlossen ist.

10. Schaltvorrichtung (D) nach einem der Ansprüche 1 bis 7, **dadurch gekennzeichnet, dass** die Schaltvorrichtung (D) vom Typ Trennvorrichtung ist, wobei der gemeinsame Anschluss (Co) sowie ein einziger von den zwei individuellen Anschlüssen (I₁) und (I₂) jeweils an einen Versorgungskreis angeschlossen sind.

11. Schaltvorrichtung (D) nach vorangehendem Anspruch, wobei
- in einer ersten Variante der gemeinsame Anschluss (Co) ein Anschluss ist, der entweder ein Anschluss (T) ist, der an eine Abnehmerleitung (7) angeschlossen ist, wobei einer der individuellen Anschlüsse (I₁, I₂) dann ein Anschluss (Pb) ist, der an ein Abnehmermittel des Stroms (2a) angeschlossen; oder ein Anschluss (Pb) ist, der an ein Abnehmermittel (2a) angeschlossen ist, wobei einer der individuellen Anschlüsse (I₁, I₂) dann ein Anschluss (Pb) ist, der an eine Abnehmerleitung (7) angeschlossen ist;
- in einer zweiten Variante der gemeinsame Anschluss (Co) ein Anschluss (T) ist, der entweder ein Anschluss (T) ist, der an eine Abnehmerleitung (7) angeschlossen ist, wobei einer der individuellen Anschlüsse (I₁, I₂) dann ein Anschluss (R) ist, der an eine Leitung zwischen Fahrzeugen (5) angeschlossen; oder ein Anschluss (R) ist, der an eine Leitung zwischen Fahrzeugen (5) angeschlossen ist, wobei einer der individuellen Anschlüsse (I₁, I₂) dann ein Anschluss (T) ist, der an eine Abnehmerleitung (7) angeschlossen ist.

12. Schaltvorrichtung (D) nach einem der vorangehenden Ansprüche, **dadurch gekennzeichnet, dass** die Anschlüsse (I₁, I₂, Co) der Schaltvorrichtung, die an eine Versorgungsleitung angeschlossen sind, mit Ausnahme des oder der Anschlüsse, die an eine Erdleitung angeschlossen sind, an Verbindungspunkte angeschlossen sind, die von dem Träger (65) isoliert sind.

13. Verfahren zum Betreiben einer Schaltvorrichtung (D), wobei die Schaltvorrichtung (D) nach einem der vorangehenden Ansprüche zwischen dem ersten Zustand und dem zweiten Zustand ist, **dadurch gekennzeichnet, dass** es umfasst:
- einen Schritt der Versorgung der Spulen (61, 610) mit Strom in einer ersten Fließrichtung des Stroms, um das Kontaktmittel (52) in Richtung des zweiten individuellen Anschlusses (I₂) anzutreiben; und
- einen Schritt der Unterbrechung der Versorgung der Spulen (61, 610) mit Strom, wenn das Kontaktmittel (52) die elektrische Verbindung mit dem zweiten Anschuss (I₂) herstellt, um das Kontaktmittel mittels der Permanentmagnete (64, 640) in Position zu halten.

14. Verfahren zum Betreiben einer Schaltvorrichtung (D), wobei die Vorrichtung nach einem der Ansprüche 1 bis 12 ist, um die Kommutierung zwischen dem zweiten Zustand und dem ersten Zustand durchzuführen, **dadurch gekennzeichnet, dass** es umfasst:
- einen Versorgungsschritt der Spulen (61, 610) mit Strom in einer zweiten Fließrichtung des Stroms, um das Kontaktmittel (52) in Richtung des ersten individuellen Anschlusses (I₁) anzutreiben;
- einen Schritt der Unterbrechung der Versorgung der Spulen (61, 610) mit Strom, wenn das Kontaktmittel (52) die elektrische Verbindung mit dem ersten Anschluss (I₁) herstellt, um das Kontaktmittel mittels der Permanentmagnete (64, 640) in Position zu halten.

15. Verfahren zum Betreiben einer Schaltvorrichtung (D) nach Anspruch 13, **dadurch gekennzeichnet, dass** bei dem Schritt der Versorgung das Kontaktmittel (52) von dem ersten individuellen Anschluss (I₁) zu dem zweiten individuellen Anschuss (I₂) angetrieben wird, wenn die Längskomponente des magnetischen Feldes, das von dem in der Spule (61) fließenden Strom erzeugt wird, sich der Längskomponente des Magnetfeldes entgegenstellt, das durch die Permanentmagnete (62) erzeugt wird, wobei das Kontaktmittel (52) dann zu dem zweiten individuellen Anschluss (I₂) mittels einer Verschiebungsvorrichtung (58, 580, 53) angetrieben wird.

16. Elektrische Ausrüstung (EE), **dadurch gekennzeichnet, dass** sie, integriert auf einem einzigen individuellen Träger (67), aufweist:
- eine Vorrichtung zum Messen der Spannung (UI) und des Stroms;
- eine Schaltvorrichtung (D) nach Anspruch 9.

17. Elektrische Ausrüstung (EE) nach vorangehendem Anspruch, **dadurch gekennzeichnet, dass** sie außerdem, integriert auf dem einzigen individuellen Träger (67), mindestens eine Ausrüstung aufweist, ausgewählt aus:
- einem Trennerdungsschalter (HOM);
- einem Blitzableiter (9);
- einem einphasigen Schutzschalter (DJM).

## Claims

1. A switching device (D) arranged on an electrically powered vehicle, able to switch, by rectilinear movement of a contact means (52) using a driving means (60), indifferently in both directions, between a first state in which said contact means (52) establishes an electrical connection between a first individual terminal (I₁) and a shared terminal (Co) and a second state in which said contact means (52) establishes an electrical connection between a second individual terminal (I₂) and said shared terminal (Co), said individual terminals (I₁, I₂), said shared terminal (Co), said contact means (52) being arranged within a single insulator (14), said switching device (D) being **characterized in that** said driving means is arranged within said insulator (14).

2. The switching device (D) according to claim 1, **characterized in that**:
- the insulator (14) comprises an enclosure (15) defining an inner space (16) extending in a longitudinal direction (L);
- the first individual terminal (I₁), the second individual terminal (I₂) and the contact means (52) are spaced longitudinally apart along the longitudinal direction (L);
- the contact means (52) extends in the longitudinal direction (L) between the first individual terminal (I₁) and the second individual terminal (I₂);
- said contact means (52) is connected to said shared terminal (Co) by a connecting means (50).

3. The switching device (D) according to any one of the preceding claims, **characterized in that** during the switching, the contact means (52) undergoes a translational open in the longitudinal direction (L) so as to be moved, indifferently in both directions, from a first position in which it establishes the electrical connection with the first individual terminal (I₁) toward a second position in which it establishes the electrical connection with the second individual terminal (I₂).

4. The switching device (D) according to any one of the preceding claims, **characterized in that** the inner space (16) is sealed and is filled with a dielectric fluid.

5. The switching device (D) according to any one of the preceding claims, **characterized in that** the driving means (60) comprises:
- at least two windings (61, 610) integrated into the enclosure (15) and each encompassing an individual terminal (I₁, I₂);
- permanent magnets (64, 640) distributed on the ends of the enclosure (15);
- a movement means (58, 580, 53) of the contact means (52);
- the windings (61, 610) being supplied with power by a power supply means arranged outside the insulator (14).

6. The switching device (D) according to any one of the preceding claims, **characterized in that** said device (D) is arranged on an electrically powered vehicle, on a support (65), such that the longitudinal direction (L) is substantially vertical.

7. The switching device (D) according to any one of the preceding claims, **characterized in that** said device (D) is arranged on a railway vehicle, on a support (65), such that the longitudinal direction (L) is substantially horizontal.

8. The switching device (D) according to any one of the preceding claims, **characterized in that** said switching device (D) is of the switch type, the first individual terminal (I₁), the second individual terminal (I₂), and the shared terminal (Co) each being connected to a power supply circuit.

9. The switching device (D) according to the preceding claim, wherein:
- the first individual terminal (I₁) is a ground terminal (O) and is electrically connected to a ground line (10);
- the second individual terminal (I₂) is a capture terminal (C) and is electrically connected to a capture line (7);
- the shared terminal (Co) is a power terminal (H) and is connected to a direct power line (8).

10. The switching device (D) according to any one of claims 1 to 7, **characterized in that** said switching device (D) is of the selector type, the shared terminal (Co) as well as only one from among the two individual terminals (I₁) and (I₂) each being connected to a power supply circuit.

11. The switching device (D) according to the preceding claim, wherein
- in a first alternative, the shared terminal (Co) is a terminal that is: either a terminal (T) connected to a capture line (7), one of the individual terminals (I₁, I₂) then being a terminal (Pb) connected to a capture means of the current (2a); or a terminal (Pb) connected to a capture means (2a), one of the individual terminals (I₁, I₂) then being a terminal (Pb) connected to a capture line (7);
- in a second alternative, the shared terminal (Co) is a terminal (T) that is: either a terminal (T) connected to a capture line (7), one of the individual terminals (I₁, I₂) then being a terminal (R) connected to an inter-vehicle line (5); or a terminal (R) connected to an inter-vehicle line (5), one of the individual terminals (I₁, I₂) then being a terminal (T) connected to a capture line (7).

12. The switching device (D) according to any one of the preceding [claims], **characterized in that** the terminals (I₁, I₂, Co) of the switching device that are connected to a power supply line, with the exception of said terminal(s) connected to a ground line, are connected to connection points that are insulated from the support (65).

13. A method for implementing a switching device (D), said switching device (D) being according to any one of the preceding claims, between said first state and said second state, **characterized in that** it comprises:
- a step for supplying current to the windings (61, 610), in a first circulation direction of the current, so as to drive the contact means (52) toward the second individual terminal (I₂); and
- a step for interrupting the supply of current of the windings (61, 610), when the contact means (52) establishes the electrical connection with the second terminal (I₂), so as to keep the contact means in position using permanent magnets (64, 640).

14. A method for implementing a switching device (D), said device being according to any one of claims 1 to 12, to perform switching between said second state said first state, **characterized in that** it comprises:
- a step for supplying current to the windings (61, 610), in a second circulation direction of the current, so as to drive the contact means (52) toward the first individual terminal (I₁); and
- a step for interrupting the supply of current of the windings (61, 610), when the contact means (52) establishes the electrical connection with the first terminal (I₁), so as to keep the contact means in position using permanent magnets (64, 640).

15. The method for implementing a switching device (D) according to claim 13, **characterized in that** during the power supply step, the contact means (52) is driven from the first individual terminal (I₁) toward the second individual terminal (I₂), when the longitudinal component of the magnetic field created by the current circulating in the winding (61) opposes the longitudinal component of the magnetic field created by the permanent magnets (62), said contact means (52) then being driven toward the second individual terminal (I₂), using a movement device (58, 580, 53).

16. A piece of electrical equipment (EE), **characterized in that** it includes, integrated on a single individual substrate (67):
- a current voltage measuring device (UI);
- a switching device (D) according to claim 9.

17. The piece of electrical equipment (EE) according to the preceding claim, **characterized in that** it further includes, integrated on said single individual substrate (67), at least one piece of equipment chosen from among:
- a grounding breaker (HOM);
- a lightning arrestor (9);
- a single-phase circuit breaker (DJM).
